# EUROPEAN PATENT SPECIFICATION

(11) **EP 1 547 842 B1**
(45) Date of publication and mention of the grant of the patent: **31.12.2008**
(21) Application number: 04106789.3
(22) Date of filing: 21.12.2004
(51) Int. Cl.: F02D 41/02, F01N 3/20, B60K 6/20

(54) **Method for recovering braking energy in a hybrid engine and associated apparatus**
Verfahren für ein regeneratives Bremssystems in einem Hybridantriebssystem sowie entsprechende Vorrichtung.
Procédé de récupération de l'énergie du freinage dans un système de traction hybride et unité de traction correspondant

(30) Priority: 22.12.2003 IT MI20032556
(43) Date of publication of application: 29.06.2005
(73) Proprietor: IVECO S.p.A., 10156 Torino (IT)
(72) Inventor: Gstrein, Wolfgang, 9320 Arbon (CH); Dellora, Giancarlo, 10129 Torino (IT)
(74) Representative: Gervasi, Gemma

(56) References cited:
- EP-A- 0 603 907
- EP-A- 1 197 642
- US-B1- 6 362 535

## Description

### FIELD OF THE INVENTION

This invention relates to a method for recovering the energy generated by the electric motor in a hybrid engine apparatus during braking.

### STATE OF THE ART

So-called hybrid engine apparatuses, which are a combination of an internal combustion engine and an electric motor, have been developed as a means of enhancing the performance of internal combustion engine vehicles. The electric motor supplies power when additional acceleration performance is needed or in the low rpm range, when the combustion engine would operate under low speed and high load conditions, with far from optimal efficiency. This makes it possible to reduce emissions.

The electric motor can also be used as a generator, to generate braking torque that is useful during deceleration or braking phases. However, during the braking phase a considerable amount of electric energy is generated and concentrated within a very short time; the batteries that are available, especially those of the size used in vehicles, are not usually capable of absorbing such high peak currents without being damaged. Exposing one of these batteries to a load such as that produced by a regenerative braking cycle could even cause an explosion.

Therefore, the energy generated by braking is usually dissipated in the form of heat, and cannot be used.

US 6,362,535 showing the features of the preamble of claim 1 and EP 603 907 describe hybrid vehicles wherein excess electric energy generated during braking is used, respectively, to heat a catalytic converter or to regenerate a particulate trap. An electric heater is placed in the exhaust line of a diesel engine, to heat gases flowing therein.

The exigency is still felt to better control the temperature of the gases fed to the after treatment device.

### SUMMARY OF THE INVENTION

The problem described above has now been solved with a method according to claim 1, in particular a method for recovering the electric energy generated by the electric generator in a hybrid engine apparatus, comprising an internal combustion engine, an electric generator, and a device to treat the exhaust gases from said combustion engine, method comprising generation of electric energy by said electric generator, conversion of said energy into heat and transfer of said heat to said exhaust gas treatment device.

Said treatment device may be, for example, a particulate filter or trap or a catalytic converter.

The energy may be converted into heat by means of a specific electric heater that may be a resistor, an induction heater, a microwave heater or another type of heater. The method may consist of heating a gas that flows through the treatment system transferring the heat thereto. Said gas a gas that is fed into the exhaust gas line and that may optionally be mixed with the exhaust gas.

According to a preferred embodiment of the invention, the electric energy that is generated by the electric generator is supplied directly to said heater, where it is immediately converted into heat without being stored in batteries or accumulators.

The exhaust gases from the combustion engine also include the gas (air) discharged by the engine during possible decompression braking.

This invention also relates to a hybrid engine apparatus according to claim 6, comprising:
a combustion engine;
an electric generator;
a device for treating the exhaust gases from such combustion engine;
an electric heater, connected to said electric generator
a duct for the exhaust gases from said combustion engine, a conduit (2) for introducing a gas into such exhaust gas duct, said electric heater being capable of heating a gas in such conduit.

The electric generator may be an electric motor that acts as a generator during braking, or in any case a device capable to supply braking power by generating electric energy (such as a retarder).

It is a particular object of the invention what claimed in the appended claims.

### DESCRIPTION OF THE FIGURES

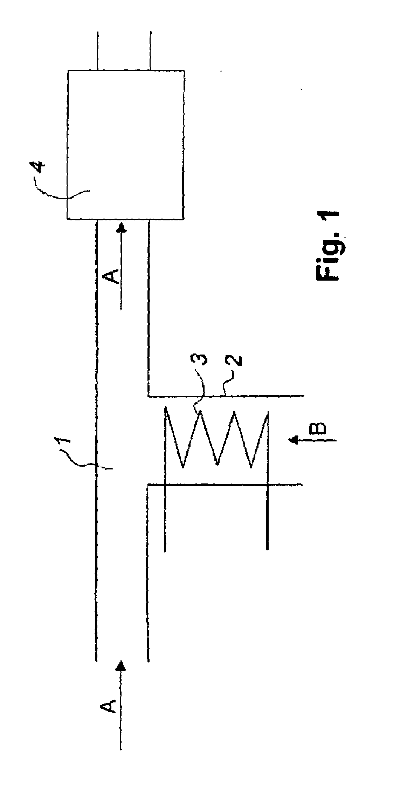

The invention will now be illustrated through a detailed description of the preferred but not exclusive embodiments, furnished merely by way of example, with the aid of attached figure 1, which is a scheme of an apparatus adapted to perform the method according to this invention.

### DETAILED DESCRIPTION

With reference to figure 1, which illustrates a scheme of a system that completes a hybrid engine apparatus, preferably of a vehicle and, more preferably, of an industrial vehicle, provided with exhaust gas purification devices. There is a duct 1 for the exhaust gases from an internal combustion engine (for example a diesel engine) through which the exhaust gases flow in the direction of the arrows A in a section that is upstream of the gas purification devices (preferably a particulate trap or a catalytic converter, both of which may be of a conventional type).

Inside the conduit 2 is the resistor 3 that receives current from an electric generator. A gas (for example air) can be made to flow along the conduit 2 in the direction of the arrow B. Such gas is supplied in an appropriate manner and may be introduced through the conduit 2.

According to a particular aspect of this invention, the gas, preferably air, that may be taken in from the outside, is supplied to the conduit 2 by suitable means, such as a compressor, for example an electric compressor, that may, for example, be powered by the batteries of the vehicle or in another way.

During braking, the current generated by the electric generator is supplied to the resistor 3 heating it. Said air then flows into the duct 1 and then through the exhaust gas treatment device 4. The heat thus generated by braking is transferred to said treatment device. With this method said heat can be used to regenerate a particulate trap, for example, by using hot air.

In the latter case, the combustion gases can be maintained at a high temperature so that the heat is transferred to a catalytic converter, if present, in order to keep its temperature high enough to ensure the continuous operation thereof, even at low rpm or in conditions where the vehicle is often required to stop.

According to another aspect of this invention, the resistor may be replaced with an appropriate electric heater, such as an induction or microwave heater, installed in the conduit 2. The heater, of any type, may also be installed outside or around the duct 1 or the conduit 2, provided it is capable of heating the gases inside.

By way of example, temperatures of at least 250 °C, and preferably of at least 300 °C are useful for cleaning particulate traps. For example, such traps can be regenerated at 350 °C.

The method according to this invention provides a valid and economical means for regenerating particulate traps and/or for maintaining the temperature of these and other purification systems, more continuously than regeneration cycles (which are usually effected when the pressure drop across the trap exceeds a fixed level), eliminating or reducing the need to run such cycles, which consist of heating the exhaust gases by operations upstream of the engine (such as intercooler by-pass valves, regulation of the air/fuel ratio in the variable geometry turbo) or the use of specific additives that are usually introduced with the fuel.

A considerable amount of power can usually be generated by the vehicle during braking, basically as a function of the vehicle's weight and speed. By way of example, a 3.5-ton industrial vehicle can generate 50 kW and a 44-ton vehicle can generate 600 kW. A portion of such power can be absorbed by the electric generator and used as described above. The electric generator and the heater may thus be suitably dimensioned. According to the invention it is possible to increase the portion of braking energy that is absorbed by the electric generator with respect to other systems (brakes, engine brake, decompression brake) operating in parallel, since this invention solves the disposal problems of said energy, which could not be stored in the form of electric energy, as described above, but in a very small amount. If the method foresees heating of air from the combustion engine during decompression braking, for example, the braking power supplied by the two systems can be balanced, to ensure the appropriate air flow rates in relation to the heat generated by the heater.

To printer: please print the patent without underlining.

## Claims

1. Method for recovering the electric energy generated by the electric generator in a hybrid engine apparatus that comprises an internal combustion engine, an electric generator, and a device (4) for the treatment of the exhaust gases from said combustion engine, comprising generation of electric energy by means of said electric generator, the conversion of said energy into heat and the transfer of said heat to said exhaust gas treatment device, **characterized by** the fact that the heat is transferred to a gas that is subsequently supplied to a duct through which the exhaust gases flow.

2. Method according to claim 1 **characterized by** the fact that the electric energy is converted into heat by a resistor.

3. Method according to claim 1, **characterized by** the fact that the electric energy is converted into heat by means of an electric induction or microwave heater.

4. Method according to any of the previous claims **characterized by** the fact that said exhaust gas treatment device is a particulate trap.

5. Method according to any of the claims from 1 to 4, **characterized by** the fact that said exhaust gas treatment device is a catalytic converter.

6. Hybrid engine apparatus comprising:
a combustion engine;
an electric generator;
a device (4) for the treatment of the exhaust gases from said combustion engine; an electric heater (3) connected to said electric generator
**characterized by** the fact that it comprises a duct (1) for the exhaust gases from said combustion engine, a conduit (2) for introducing a gas into such exhaust gas duct, and that said electric heater is capable of heating a gas in such conduit.

7. Engine apparatus according to claim 6, **characterized by** the fact that it comprises means for supplying air, taken from the outside, to the exhaust gas duct via said conduit.

8. Engine apparatus according to claim 6 designed to implement the method according to any of the claims from 1 to 5.

## Patentansprüche

1. Verfahren zur Rückgewinnung der Elektroenergie, die vom Stromgenerator in einem Hybridantriebssystem erzeugt wird, wobei dieses Hybridantriebssystem umfasst: eine Brennkraftmaschine, einen Stromgenerator und eine Vorrichtung (4) für die Behandlung der Abgase aus der genannten Brennkraftmaschine, wobei dieses Verfahren die Erzeugung von Elektroenergie mittels des genannten Stromgenerators, die Umwandlung der genannten Energie in Wärme und die Übertragung der genannten Wärme an die genannte Vorrichtung zur Behandlung der Abgase umfasst, **dadurch gekennzeichnet, dass** die Wärme an ein Gas übertragen wird, welches anschließend einem Kanal zugeführt wird, durch welchen die Abgase strömen.

2. Verfahren nach Anspruch 1, **dadurch gekennzeichnet, dass** die Elektroenergie durch einen Widerstand in Wärme umgewandelt wird.

3. Verfahren nach Anspruch 1, **dadurch gekennzeichnet, dass** die Elektroenergie mit Hilfe einer elektrischen Induktionsheizvorrichtung oder einer Mikrowellenheizvorrichtung umgewandelt wird.

4. Verfahren nach irgend einem der vorangehenden Ansprüche, **dadurch gekennzeichnet, dass** die genannte Vorrichtung zur Abgasbehandlung ein Abscheider für teilchenförmiges Material ist.

5. Verfahren nach irgend einem der Ansprüche 1 bis 4, **dadurch gekennzeichnet, dass** die genannte Vorrichtung zur Abgasbehandlung ein Katalysator ist.

6. Hybridantriebssystem, welches umfasst:
eine Brennkraftmaschine,
einen Stromgenerator,
eine Vorrichtung (4) zur Behandlung der Abgase aus der genannten Brennkraftmaschine,
eine elektrische Heizvorrichtung (3), welche mit dem genannten Stromgenerator verbunden ist,**dadurch gekennzeichnet, dass** sie einen Kanal (1) für die Abgase von der genannten Brennkraftmaschine und eine Leitung (2) zum Einleiten eines Gases in einen solchen Abgaskanal umfasst und dass die genannte elektrische Heizvorrichtung imstande ist, ein Gas in einer derartigen Leitung zu erwärmen.

7. Antriebsvorrichtung nach Anspruch 6, **dadurch gekennzeichnet, dass** sie Mittel zur Zuführung von Luft, die von außen kommt, in den Abgaskanal über die genannte Leitung umfasst.

8. Antriebsvorrichtung nach Anspruch 6, welche so ausgelegt ist, dass in diese das Verfahren nach irgend einem der Ansprüche 1 bis 5 implementiert ist.

## Revendications

1. Procédé pour récupérer l'énergie électrique générée par le générateur électrique dans un dispositif formant moteur hybride qui comprend un moteur à combustion interne, un générateur électrique, et un dispositif (4) pour le traitement des gaz d'échappement provenant dudit moteur à combustion, comprenant la génération d'énergie électrique par l'intermédiaire dudit générateur électrique, la conversion de ladite énergie en chaleur, **caractérisé en ce que** la chaleur est transférée vers un gaz qui est ensuite envoyé vers un conduit à travers lequel les gaz d'échappement circulent.

2. Procédé selon la revendication 1, **caractérisé en ce que** l'énergie électrique est convertie en chaleur par une résistance.

3. Procédé selon la revendication 1, **caractérisé en ce que** l'énergie électrique est convertie en chaleur par l'intermédiaire d'une induction électrique ou d'un dispositif de chauffage à micro-ondes.

4. Procédé selon l'une quelconque des revendications précédentes, **caractérisé en ce que** ledit dispositif de traitement de gaz d'échappement est un piège à particules.

5. Procédé selon l'une quelconque des revendications 1 à 4, **caractérisé en ce que** ledit dispositif de traitement de gaz d'échappement est un convertisseur catalytique.

6. Dispositif formant moteur hybride, comprenant :
un moteur à combustion,
un générateur électrique,
un dispositif (4) pour le traitement des gaz d'échappement à partir dudit moteur à combustion,
un dispositif de chauffage électrique (3) relié audit générateur électrique, **caractérisé en ce qu'**il comprend un conduit (1) pour les gaz d'échappement à partir dudit moteur à combustion, un conduit (2) pour l'introduction d'un gaz dans un tel conduit de gaz d'échappement, et **en ce que** ledit dispositif de chauffage électrique est capable de chauffer un gaz dans un tel conduit.

7. Dispositif formant moteur selon la revendication 6, **caractérisé en ce qu'**il comporte des moyens pour fournir de l'air, attiré depuis l'extérieur, vers le conduit de gaz d'échappement via ledit conduit.

8. Dispositif formant moteur selon la revendication 6, conçu pour mettre en oeuvre le procédé selon l'une quelconque des revendications 1 à 5.
